Europäisches Patentamt

European Patent Office

Office européen des brevets

(11) Numéro de publication: **0 283 352 B1**

## FASCICULE DE BREVET EUROPEEN

(45) Date de publication de fascicule du brevet: **02.09.92**   (51) Int. Cl.⁵: **G01N 25/68**

(21) Numéro de dépôt: **88400408.6**

(22) Date de dépôt: **23.02.88**

(54) **Dispositif de détection de la température du point de rosée des fumées d'un conduit d'évacuation notamment d'une chaudière étanche à gaz.**

(30) Priorité: **19.03.87 FR 8703804**

(43) Date de publication de la demande:
**21.09.88 Bulletin 88/38**

(45) Mention de la délivrance du brevet:
**02.09.92 Bulletin 92/36**

(84) Etats contractants désignés:
**BE DE ES GB IT NL**

(56) Documents cités:
**FR-A- 1 439 238
FR-A- 2 205 198
US-A- 2 763 150
US-A- 3 886 784**

(73) Titulaire: **SAUNIER DUVAL EAU CHAUDE
CHAUFFAGE S.D.E.C.C. - Société anonyme
Les Miroirs 18 avenue d'Alsace
F-92400 Courbevoie(FR)**

(72) Inventeur: **Vallat, Didier
33, rue de Castor
F-44700 Orvault(FR)**

(74) Mandataire: **Lhuillier, René et al
ARMENGAUD JEUNE CABINET LEPEUDRY 52,
avenue Daumesnil
F-75012 Paris(FR)**

# Description

L'invention qui se rapporte à un dispositif de détection de la température du point de rosée des fumées d'un conduit d'évacuation notamment d'une chaudière étanche à gaz concerne plus précisément un dispositif à caloduc disposé entre le tube d'évacuation des fumées et le tube d'admission d'air frais à l'appareil.

Dans les chaudières du type étanche à gaz à tirage forcé, on sait que la circulation de l'air nécessaire à la combustion ainsi que simultanément l'évacuation des gaz brûlés sont assurés au moyen d'un ventilateur électrique qui peut être placé soit en aval du corps de chauffe de l'appareil sur l'aspiration des produits de combustion, - ce qui a pour effet de mettre la chambre de combustion en dépression, - soit en amont du corps de chauffe sur l'arrivée de l'air de combustion, - ce qui a pour effet de mettre la chambre de combustion en pression.

Dans les deux cas l'ensemble brûleur-corps de chauffe-ventilateur qui constitue le circuit de combustion se trouve dans une enceinte étanche vis-à-vis de l'atmosphère du local dans lequel est installé l'appareil. Dans les deux cas également l'arrivée de l'air frais et l'évacuation des produits de combustion se fait à travers le mur extérieur du logement généralement au moyen de deux tubes coaxiaux, ledit système étant dit à ventouse.

Les appareils de ce type présentent incontestablement des avantages dont, une absence totale de risque d'asphyxie du fait que leur circuit de combustion est sans communication possible avec l'atmosphère du local d'habitation et une économie d'installation du fait qu'ils ne nécessitent pas la création d'un conduit de fumée et que le passage des tubes coaxiaux à travers le mur ne demande que le percement d'un trou cylindrique de petit diamètre.

Par contre ils présentent jusqu'à présent certains inconvénients.

En effet l'utilisation d'un moyen mécanique qui est un ventilateur pour assurer l'entraînement de l'air nécessaire à la combustion oblige à prévoir un dispositif de sécurité qui subordonne l'admission du gaz au brûleur au fonctionnement normal du ventilateur, c'est-à-dire à l'apparition d'un certain débit d'air de combustion; ce dispositif de sécurité consiste par exemple à utiliser un contact électrique actionné par une palette très légère disposée en un point approprié du circuit de combustion et soumise en ce point à l'action due à la vitesse de l'air ou des produits de combustion. Ou encore le dispositif utilise une membrane différentielle soumise à la différence de pression créée par un dispositif venturi pour actionner un contact électrique. Mais ces dispositif de sécurité fonctionnent en tout ou rien, c'est-à-dire qu'ils interdisent l'admission du gaz au brûleur tant que le débit fourni par le ventilateur n'est pas supérieur à une valeur fixée à l'avance. Tout cela serait valable si les appareils devaient fonctionner toujours au même régime. Ce n'est pas le cas dans les appareils modernes où l'on recherche de plus en plus à moduler le régime d'admission gaz aux brûleurs en fonction de la puissance recherchée. Cela nécessite par conséquent d'asservir parfaitement le débit d'air frais nécessaire à la combustion, au débit de gaz admis aux injecteurs, cet air frais devant être, comme on sait, en léger excès pour assurer une bonne combustion.

Une solution intéressante pour connaître ce débit d'air et réduire ce léger excès à une valeur prédéterminée serait d'utiliser des sondes, mais celles-ci ne donneraient que des valeurs concernant le mélange gazeux, sans distinguer si ce mélange est correct.

L'invention propose alors une solution qui consiste à mesurer la température du point de rosée des fumées sortant par le conduit d'évacuation d'une chaudière étanche à gaz, ce qui permet connaissant le débit de gaz de connaître avec précision l'excès d'air et le réduire à une valeur déterminée. Le principe de la mesure du point de rosée permettant d'optimiser les échanges de chaleur est déjà connu notamment par le US-A 2 763 150. Mais l'utilisation d'une telle sonde nécessite le refroidissement de la partie où se fait la mesure (circulation d'eau froide, effet Peltier, etc...). L'invention propose alors d'utiliser la différence de température présente dans une chaudière étanche, dont une (l'air ambiant) est toujours inférieure au point de rosée des fumées, afin d'assurer le refroidissement de la partie où s'effectue la mesure.

L'invention a donc pour objet une chaudière étanche à gaz munie d'un dispositif de détection de la température du point de rosée des fumées émises par ladite chaudière, selon lequel ledit dispositif est localisé dans un endroit de l'ensemble chaudière-ventouse où il est soumis à la fois au courant d'air rentrant dans la chaudière ainsi qu'au courant de fumées s'en échappant et selon lequel il porte une sonde de température côté fumées.

Selon une caractéristique principale de l'invention une capsule fermée remplie d'une matière jouant le rôle de caloduc, avantageusement un fluide figorigène, est placée sur le conduit central qu'elle traverse, une de ses extrémités se trouvant dans l'espace annulaire d'admission d'air frais tandis que l'autre extrémité se trouve dans le conduit central d'évacuation des gaz brûlés et porte une sonde de température.

Selon une caractéristique particulière de l'invention, la sonde de température est logée dans un puits ménagé entre le fond de la capsule du côté du conduit central et une coupelle d'extrémité rapportée sur ce fond, la face extérieure de la coupelle étant plane et lisse.

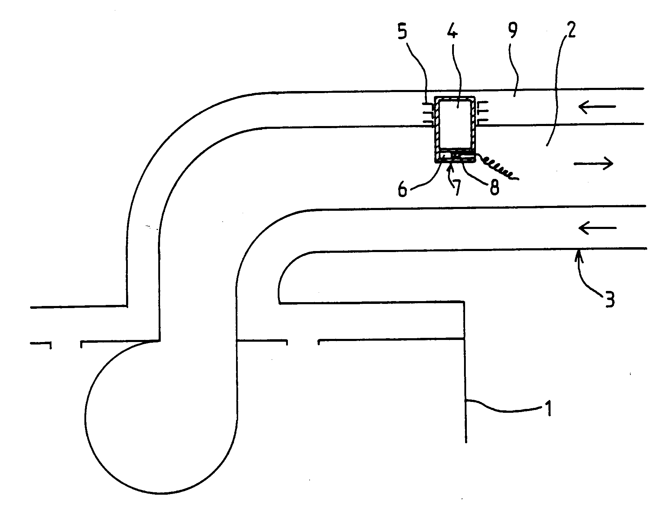

D'autres caractéristiques et les avantages de l'invention apparaîtront à la lecture de la description qui va suivre d'une forme de réalisation prise à titre d'exemple dans lequel il est fait référence au dessin annexé qui représente de façon très schématique une vue en coupe du dispositif de détection selon l'invention.

L'évacuation des gaz brûlés et l'admission d'air frais à une chaudière étanche 1, sont assurés par des conduits coaxiaux 2 et 3, l'évacuation des produits de combustion s'effectuant dans le sens indiqué par le conduit 2, l'air frais étant admis en sens inverse par l'espace annulaire 9 compris entre le conduit central 2 et le conduit extérieur 3.

Dans un orifice prévu sur le conduit 2 est fixé un échangeur thermique 4 à surface convenablement dimensionnée afin que la partie baignant dans les fumées soit toujours en dessous du point de rosée des fumées pour les combustibles utilisés. Avantageusement l'échangeur est un boîtier 4, sorte de capsule cylindrique fermée remplie de liquide frigorigène et jouant le rôle de caloduc. Une partie de cette capsule, qui se trouve dans l'espace annulaire 9 de passage d'air frais est pourvue d'ailettes circulaires 5 destinées à favoriser les échanges thermiques. La partie opposée de la capsule qui se trouve dans le conduit de fumée 2 est munie d'un puits 6, entre le fond de la capsule et une coupelle d'extrémité 7 rapportée sur ce fond. Le puits sert de logement à une sonde de température 8. La face extérieure de la coupelle 7 est une paroi plane et lisse.

Le mélange gazeux évacué par le conduit 2 contient de la vapeur d'eau qui pourra condenser à une température qui dépend de la proportion de cette vapeur d'eau dans le mélange. L'air frais circulant dans le conduit annulaire 3 lèche les ailettes 5 du boîtier 4 dont la température tend à se rapprocher de celle de l'air. Le fluide qu'il contient transmet ce refroidissement à l'autre extrémité du boîtier, où les fumées circulant dans le conduit 2 se refroidissent au contact de la paroi lisse 7. Quand on a atteint la température du point de rosée, il y a condensation sur cette paroi et la température correspondante est mesurée par la sonde 8.

Si le taux d'air a augmenté dans le mélange gazeux, la concentration de vapeur d'eau, essentiellement produite par la combustion, a diminuée. Si on refroidit ce mélange, la température à laquelle l'eau se condense va augmenter. La mesure de cette température du point de rosée renseigne par conséquent sur l'excès d'air contenue dans le mélange.

Cette sonde a une sécurité intrinsèque positive : en effet, si une fuite de liquide se produit, la sonde de température indique une température supérieure au point de rosée stoechiométrique des fumées, et entraîne donc une coupure de la chaudière étanche.

**Revendications**

1. Chaudière étanche à gaz (1) munie d'un dispositif de détection de la température du point de rosée des fumées émises par ladite chaudière, caractérisée en ce que le dispositif de détection est localisé dans un endroit de l'ensemble chaudière-ventouse où il est soumis à la fois au courant d'air entrant dans la chaudière ainsi qu'au courant de fumées s'en échappant, de façon à refroidir localement les fumées jusqu'à leur point de rosée, et en ce qu'il porte une sonde de température (8) côté fumées.

2. Chaudière étanche à gaz (1) du selon la revendication 1, caractérisée par le fait que le dispositif de détection utilise, entre le conduit d'évacuation des fumées (2) et celui d'admission d'air frais (9), un échangeur thermique (4) à surface convenablement dimensionnée afin que la partie baignant dans les fumées soit toujours en dessous du point de rosée des fumées pour les combustibles utilisés.

3. Chaudière étanche à gaz (1) selon la revendication 1, caractérisée par le fait que l'échangeur thermique est une capsule (4) remplie d'un fluide frigorigène, qui joue alors le rôle d'un caloduc.

4. Chaudière étanche à gaz (1) selon la revendication 3, caractérisée par le fait que la sonde de température (8) est logée dans un puits (6) ménagé entre le fond de la capsule du côté du conduit central (2) et une coupelle d'extrémité (7) rapportée sur ce fond.

5. Chaudière étanche à gaz (1) selon la revendication 4, caractérisée en ce que la face extérieure de la coupelle (7) est plane et lisse.

6. Chaudière étanche à gaz (1) selon la revendication 1, caractérisée en ce que la partie de la capsule se trouvant dans l'espace annulaire (9) est pourvue d'ailettes (5).

**Claims**

1. Sealed gas-fired boiler (1) provided with a device for detecting the temperature of the dew point of the flue gases emitted by the said boiler, characterised in that the detection device is positioned in a location of the boiler/ventilation outlet assembly where it is subjected both to the stream of air entering the boiler and to the stream of flue gases escaping therefrom, in such a manner as to cool locally the flue gases to their dew point, and in that it carries a flue-gas temperature probe (8).

2. Sealed gas-fired boiler (1) according to Claim 1, characterised in that the detection device, between the conduit (2) discharging the flue gases and that (9) for fresh-air intake, uses a heat exchanger (4) having a suitably dimensioned surface so that the portion exposed to the flue gases is always below the dew point of the flue gases for the fuels used.

3. Sealed gas-fired boiler (1) according to Claim 1, characterised in that the heat exchanger is a capsule (4), filled with a refrigerating fluid, which then acts as a heat pipe.

4. Sealed gas-fired boiler (1) according to Claim 3, characterised in that the temperature probe (8) is housed in a well (6) made between the bottom of the capsule on the side of the central conduit (2) and an end pan (7) attached to this bottom.

5. Sealed gas-fired boiler (1) according to Claim 4, characterised in that the outer face of the pan (7) is plane and smooth.

6. Sealed gas-fired boiler (1) according to Claim 1, characterised in that the portion of the capsule located in the annular space (9) is provided with fins (5).

**Patentansprüche**

1. Luftdichter Gasheizkessel (1) mit einer Vorrichtung zum Feststellen des Rauchtaupunktes der von diesem Gasheizkessel stammenden Abgase, dadurch gekennzeichnet, daß die Vorrichtung zum Feststellen des Rauchtaupunktes an einer Stelle der Gesamteinheit Heizkessel-Luftklappe angeordnet ist, wo sie auf einmal sowohl dem in den Heizkessel eintretenden Luftstrom als auch dem Strom der austretenden Abgase dergestalt ausgesetzt ist, daß die Abgase lokal bis auf ihren Rauchtaupunkt abgekühlt werden, und daß sie auf der Seite der Rauchgase eine Temperaturmeßsonde (8) aufweist.

2. Luftdichter Gasheizkessel (1) nach Anspruch 1, dadurch gekennzeichnet, daß die Vorrichtung für ein Erfassen des Rauchtaupunktes einen zwischen der Abgasleitung (2) und der Leitung für den Einlaß von Frischluft (9) angeordneten Wärmetauscher (4) mit geeignet bemessener Oberfläche aufweist, so daß der in die Abgase hineinreichende Teil sich immer unterhalb des Rauchtaupunktes der Abgase der verwendeten Brennstoffe befindet.

3. Luftdichter Gasheizkessel (1) nach Anspruch 1, dadurch gekennzeichnet, daß der Wärmetauscher eine Kapsel (4) ist, die mit einem Kältemittelfluid gefüllt ist, das damit die Rolle eines Wärmeleiters übernimmt.

4. Luftdichter Gasheizkessel (1) nach Anspruch 3, dadurch gekennzeichnet, daß die Temperaturmeßsonde (8) in einem Schacht (6) angeordnet ist, der zwischen dem Boden der Kapsel auf der Seite der zentralen Leitung (2) und einem Näpfchen (7) am Endbereich, das an den Boden angesetzt ist, angeordnet ist.

5. Luftdichter Gasheizkessel (1) nach Anspruch 4, dadurch gekennzeichnet, daß die äußere Fläche des Näpfchens (7) eben und glatt ist.

6. Luftdichter Gasheizkessel (1) nach Anspruch 1, dadurch gekennzeichnet, daß er sich im Ringraumbereich (9) befindende Teil der Kapsel mit Rippen (5) versehen ist.